# EUROPÄISCHE PATENTANMELDUNG

(11) **EP 2 314 424 A2**
(43) Veröffentlichungstag der Anmeldung: **27.04.2011**
(21) Anmeldenummer: 10013434.5
(22) Anmeldetag: 07.10.2010
(51) Int. Cl.: B25J 9/16, G05B 19/418

(54) **Verfahren und Vorrichtung zum Steuern einer Mehrmaschinenanordnung**

(30) Priorität: 26.10.2009 DE 102009050646
(71) Anmelder: KUKA Roboter GmbH, 86165 Augsburg (DE)
(72) Erfinder: Tarragona, Christian, 86159 Augsburg (DE); Allmann, Eiko, 86150 Augsburg (DE)
(74) Vertreter: Schlotter, Alexander Carolus Paul

(57) **Zusammenfassung**

Ein erfindungsgemäßes Verfahren zum Steuern einer Mehrmaschinenanordnung mit wenigstens einer ersten Steuerung (10) und einer zweiten Steuerung (20, 30, 40) umfasst die Schritte:
b) Generierung von spezifischen Datenpaketen (Pi,Id.V) für Steuerungen (S10);
c) Übertragung dieser spezifischen Datenpakete an die Steuerungen (S20);
f) ,insbesondere selektives, Aktivieren übertragener Datenpakete (S30); und
k) Implementieren von Daten des Datenpaketes in der Steuerung infolge einer Aktivierung, insbesondere Installieren wenigstens eines Programm und/oder einer Konfigurationsdatei (S50).

## Beschreibung

Die vorliegende Erfindung betrifft ein Verfahren und eine Vorrichtung zum Steuern einer Mehrmaschinenanordnung mit mehreren Steuerungen, insbesondere einer Automatisierungszelle mit zwei oder mehr Industrierobotern.

In Automatisierungszellen, beispielsweise Fertigungszellen wie Schweiß-, Lackier- oder Montagezellen, werden häufig sehr heterogene Maschinen, beispielsweise Roboter, Werkzeugmaschinen, Förderer und dergleichen von unterschiedlichen Herstellern eingesetzt, wobei sich auch Maschinen derselben Art noch beispielsweise durch den Typ und/oder die Version ihrer Steuerung unterscheiden können.

Dies erschwert es, in solchen heterogenen Automatisierungszellen neue Projekte zu implementieren, die insbesondere andere Programme und Konfigurationsdaten für die unterschiedlichen Steuerungen bedingen.

Aus der EP 1 738 235 B1 ist ein Steuersystem, Verfahren und Rechnerprogramm bekannt, bei dem eine Robotersteuerung Informationen an eine Mensch-Maschine-Schnittstelle sendet, so dass auf dieser die richtige Version eines Roboterprogramms verwendet wird. Die Steuerung heterogener Mehrmaschinenanordnungen erleichtert dies nicht zufriedenstellend. Umgekehrt sind, bisher nur im Bereich von Büroapplikationen, Softwareverteilungsprogramme, sogenannte Deployment-Anwendungen, zur Installation von neuen Programmen auf Client-Rechnern bekannt.

Aufgabe der vorliegenden Erfindung ist es, das Steuern einer Mehrmaschinenanordnung mit mehreren Steuerungen, insbesondere einer Automatisierungszelle mit zwei oder mehr Industrierobotern, zu verbessern.

Diese Aufgabe wird durch ein Verfahren mit den Merkmalen des Anspruchs 1 gelöst. Anspruch 7 stellt eine Vorrichtung, Anspruch 8 bzw. 9 ein Computerprogramm bzw. ein Computerprogrammprodukt, insbesondere ein Speichermedium bzw. einen Datenträger zur Durchführung eines Verfahrens nach Anspruch 1 unter Schutz. Die Unteransprüche betreffen vorteilhafte Weiterbildungen.

Erfindungsgemäß wird ein, vorzugsweise im Wesentlichen simultanes, Deployment von Programmen auf Steuerungen einer Mehrmaschinenanordnung vorgeschlagen. Mit besonderem Vorteil wird die Erfindung bei heterogenen Anlagen mit unterschiedlichen bzw. verschiedenartigen Systemen eingesetzt, wobei ein System eine oder mehrere Steuerungen und/oder Maschinen, insbesondere Industrieroboter, umfasst.

Dementsprechend umfasst eine Mehrmaschinenanordnung im Sinne der vorliegenden Erfindung zwei oder mehr Maschinen, von denen vorzugsweise wenigstens eine Maschine ein Industrieroboter ist oder einen Industrieroboter umfasst. Jeder Maschine ist wenigstens eine Steuerung zugeordnet, die beispielsweise als PC-basierte Steuerung und/oder speicherprogrammierbare Steuerung (SPS, auch "Programmable Logic Controller" bzw. PLC) ausgebildet sein kann. Dabei können gleichermaßen eine Steuerung für eine oder mehrere ihr zugeordnete Maschinen oder mehrere Steuerungen für eine ihnen gemeinsam zugeordnete Maschinen vorgesehen sein. Bei einer heterogenen Anlage unterscheiden sich wenigstens zwei Steuerungen und/oder zwei gesteuerte Maschinen voneinander, beispielsweise durch ihre Struktur.

Zur Verteilung einer Automatisierungslösung für ein Projekt, beispielsweise die Lackierung eines neuen Fahrzeugtyps durch verschiedene Lackierroboter, werden erfindungsgemäß zunächst spezifische Datenpakete für an diesem Projekt beteiligte Steuerungen generiert.

Ein Daten- bzw. Deploymentpaket kann, vorzugsweise in datenkomprimierter Form, insbesondere ein oder mehrere Arbeitsprogramme für eine oder mehrere Steuerungen des Zielsystems, für das es spezifiziert wird, ein oder mehrere Installationsprogramme, Konfigurations- und/oder sonstige Daten, beispielsweise Maschinen- oder Prozessdaten bzw. -parameter enthalten. Es kann insbesondere für eine bestimmte Steuerung und/oder eine bestimmte Maschine, ein bestimmtes Projekt und/oder eine bestimmte Projektversion spezifiziert bzw. individualisiert werden. Vorteilhaft erfolgt dies jeweils durch einen steuerungs- oder systemtypspezifischen Generator, i.e. für jeden Steuerungs- oder Systemtyp ist ein Generator vorgesehen. Ein Datenpaket umfasst vorzugsweise eindeutige Identifizierungsmerkmale des Zielsystems, insbesondere der Zielsteuerung, des Zielprojektes und/oder der Zielprojektversion. Beispielsweise kann ein Generator für eine PC-basierte Steuerung eines sechsachsigen Industrieroboters für den Einsatz des Roboters zur Lackierung eines ersten Karosserietyps ein für diese Projektversion spezifisches Datenpaket generieren, für die Lackierung eines zweiten Karosserietyps ein für diese andere Version des Projekts "Karosserielackierung" spezifisches anderes Datenpaket und für den Einsatz des Roboters zum Schweißen ein für dieses andere Projekt spezifisches weiteres Datenpaket.

Diese spezifischen Datenpakete werden an die Steuerungen übertragen. Dies erfolgt vorzugsweise im Wesentlichen parallel, insbesondere über ein Netzwerk wie das Ethernet, und/oder durch eine zentrale Planungseinrichtung, insbesondere einen Computer, vorzugsweise einen portablen Computer bzw. ein Notebook.

Kann ein Datenpaket an ein Zielsystem nicht direkt übertragen werden, kann eine Kommunikationsschnittstelle, insbesondere ein Proxy, vorgesehen werden, der Daten zwischen einer Steuerung und der Planungseinrichtung bzw. dem Netzwerk weiterleitet.

In einer bevorzugten Ausführung überprüft ein Zielsystem, insbesondere dessen Steuerung, ein übertragenes Datenpaket, beispielsweise daraufhin, ob das Datenpaket für das Zielsystem bestimmt ist. Hierzu können beispielsweise oben genannte eindeutige Identifizierungsmerkmale des Zielsystems mit denen des Datenpakets verglichen werden. Insbesondere kann geprüft werden, ob eine, vorzugsweise weltweit eindeutige, Identität des Systems bzw. der Steuerung, Gerätetyp und/oder -version übereinstimmen, ob erforderliche Subsysteme und/oder Peripheriegeräte vorhanden sind und/oder die erforderliche Kinematik und/oder Systemerweiterungen, beispielsweise Technologiepakete, aufweisen.

Vorzugsweise wird das übertragene Datenpaket durch die Steuerung des Zielsystems gespeichert.

Erfindungsgemäß werden übertragene Datenpakete, vorzugsweise selektiv, aktiviert. Dies ermöglicht es, ein Projekt auf allen Zielsystemen parallel zu aktivieren. Wie die Generierung und/oder Übertragung der Datenpakete kann auch die Aktivierung der Zielsysteme bzw. deren Steuerungen durch eine zentrale Planungseinrichtung erfolgen. Beispielsweise, indem bei einer Aktivierung Informationen übermittelt werden, die zu aktivierende Zielsysteme, das Projekt, insbesondere eine hierfür spezifische Identifikation, und/oder eine Version des Projekts, das aktiviert werden soll, identifizieren, kann die Aktivierung selektiv erfolgen.

Die Aktivierung kann vorzugsweise in drei Phasen erfolgen, die nachfolgend getrennt erläutert werden, wobei jedoch Phasen auch entfallen oder gemeinsam ausgeführt werden können.

In einer Vorbereitungsphase können Zielsysteme, insbesondere deren Steuerungen, infolge einer Aktivierung überprüfen, ob ein aktivierungsspezifisches Datenpaket vorhanden ist, beispielsweise ein Datenpaket, dessen Projekt-Id und -version mit der in der Aktivierung spezifizierten übereinstimmt, d.h., ob für das zu aktivierende Projekt ein Deploymentpaket zur Verfügung steht. Zusätzlich oder alternativ wird geprüft, ob dieses Datenpaket für dieses Zielsystem bzw. diese Steuerung spezifiziert ist, und/oder ob das Zielsystem bzw. die Steuerung und/oder eine durch sie gesteuerte Maschine, eine Aktivierung gestattet. Insbesondere kann geprüft werden, ob der Systemzustand, etwa Roboterpose, Energieversorgungs-, Antriebs- und/oder Steuerungszustand die spezifische Aktivierung zulassen.

Zusätzlich oder alternativ können Steuerungen und/oder Maschinen infolge der Aktivierung in einen vorgegebenen Zustand überführt werden. Beispielsweise kann ein Roboter infolge der Aktivierung am Ende eines Produktionszyklus in einer vorgegebenen Pose, vorzugsweise der Home-Pose, angehalten und sein bisher ausgeführtes Arbeitsprogramm abgewählt werden.

Vorzugsweise wird eine erfolgreiche und/oder eine nicht erfolgreichen Vorbereitungsphase, beispielsweise an die Planungseinrichtung, zurückgemeldet. Diese kann somit vor Einleiten einer nachfolgend erläuterten Installationsphase sicherstellen, dass alle erforderlichen Deploymentpakete vorliegen und die Zielsysteme zu deren Installation bereit sind. In einer bevorzugten Ausführung wird die Aktivierung abgebrochen, wenn wenigstens ein essentielles Zielsystem keine erfolgreiche Vorbereitungsphase zurückmeldet. Stattdessen wird der bisherige Anlagenzustand unverändert beibehalten.

Erfindungsgemäß werden in einer Installationsphase infolge der Aktivierung Daten des Datenpaketes in der Steuerung Implementieren, insbesondere Arbeits- und/oder Installationsprogramm installiert und/oder Konfigurationsdaten eingepflegt. Beispielsweise werden ein neues Arbeitsprogramm in die Steuerung eines Roboters geladen und die hierzu erforderlichen Konfigurationsdateien angelegt bzw. angepasst, die zum Beispiel Maschinen- und/oder Prozessdaten enthalten können.

Vorzugsweise werden zuvor Zustandsdaten von Systemkomponenten, beispielsweise der Steuerung, abgespeichert, um gegebenenfalls die Aktivierung rückabzuwickeln.

Zusätzlich oder alternativ können Steuerungen und/oder Maschinen infolge der Aktivierung weitere vorgegebene Aktionen ausführen, beispielsweise eine (Re)Initialisierung, insbesondere einen IO-Reinit, einen Systemneustart, eine (Re)Kalibrierung oder dergleichen.

In einer bevorzugten Ausführung wird wiederum eine erfolgreiche und/oder eine nicht erfolgreichen Installationsphase, beispielsweise an die Planungseinrichtung, zurückgemeldet. Diese kann somit vor Einleiten einer nachfolgend erläuterten Startphase sicherstellen, dass alle erforderlichen Datenpakete implementiert sind. In einer bevorzugten Ausführung wird die Aktivierung abgebrochen, wenn wenigstens ein essentielles Zielsystem keine erfolgreiche Installationsphase zurückmeldet. Dann kann auf Basis der vor der Implementierung gespeicherten Zustandsdaten der alte Systemzustand wieder hergestellt werden (sogenannter "Rollback"). Bei erfolgreicher Installationsphase können diese alten, nicht mehr benötigten Zustandsdaten gelöscht werden (erfolgreicher "Rollout").

Hierzu können Steuerungen über das Ergebnis der Aktivierung anderer Steuerungen bzw. des Gesamtsystems, vorzugsweise durch die Planungseinrichtung, informiert werden.

In einer nachfolgenden Startphase können Zielsysteme, insbesondere deren Steuerungen, infolge der Aktivierung ein bzw. mehrere bei der Installationsphase installierte Programme starten. Befindet sich die Mehrmaschinenanordnung bzw. die Automatisierungszelle bereits in einem Automatikmodus, kann unmittelbar eine Fahrfreigabe erfolgen, so dass die Maschinen ihren Arbeitsprozess fortsetzen.

Um die Implementierung der Programme bzw. Daten in den verteilten, heterogenen Zielsystemen bzw. Steuerungen zu vereinfachen und zu konsolidieren, kann in einer bevorzugten Ausführung eine Struktur der Mehrmaschinenanordnung, insbesondere deren Steuerungen, in einem zentralen Projekt definiert werden. Dies kann weitgehend unabhängig von den konkreten Eigenschaften der Zielsysteme erfolgen. Beispielsweise kann die Struktur beinhalten, dass ein Sechsachsroboter mit bestimmten Traglasten und Reichweiten zur Verfügung steht. Dies ist unabhängig von dessen konkreter Ausgestaltung bzw. der Realisierung seiner Steuerung. Diese wird durch den Einsatz des steuerungs- bzw. systemspezifischen Generators berücksichtigt.

Vorzugsweise erfolgt die Aktivierung, wie vorstehend erläutert, zentral und/oder im Wesentlichen gleichzeitig. Somit können vorteilhaft inkonsistente Zustände der Mehrmaschinenanordnung bzw. einer Automatisierungszelle vermieden werden, in denen beispielsweise eine Robotersteuerung bereits ein neues Arbeitsprogramm, eine andere Robotersteuerung noch ein altes Arbeitsprogramm abarbeiten und so eine Kollision der beiden Roboter verursachen können.

Wie vorstehend erläutert, führt eine, insbesondere zentrale, Planungseinrichtung, insbesondere ein Computer die Aktivierung automatisiert durch und überwacht diese.

Weitere Vorteile und Merkmale ergeben sich aus den Unteransprüchen und den Ausführungsbeispielen. Hierzu zeigt, teilweise schematisiert:
- Fig. 1:: eine Mehrmaschinenanordnung mit einer Vorrichtung zum Steuern nach einer Ausführung der vorliegenden Erfindung; und
- Fig. 2:: den Ablauf eines durch diese ausgeführten Verfahrens nach einer Ausführung der vorliegenden Erfindung.

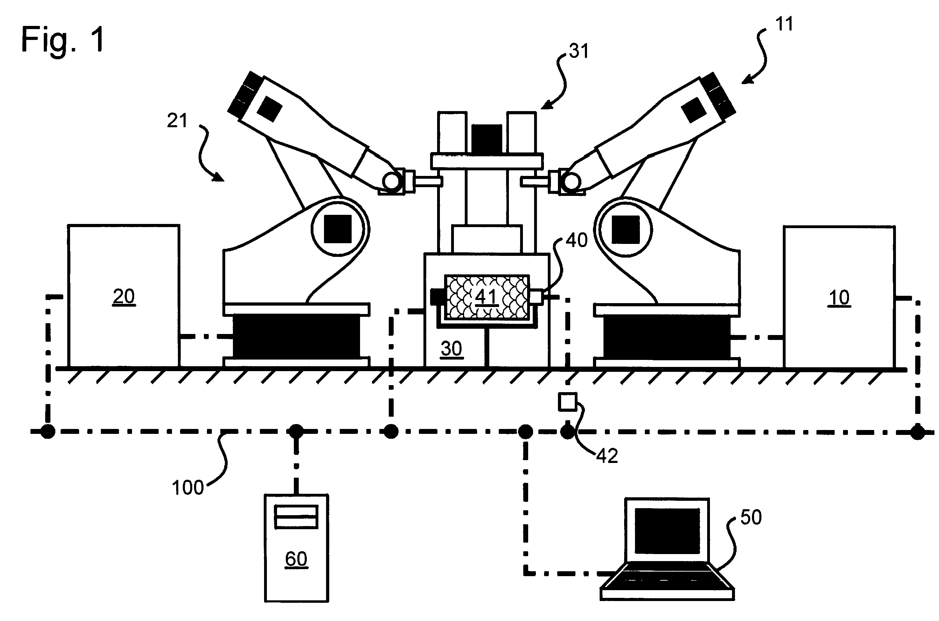

Fig. 1 zeigt eine Automatisierungszelle bzw. Mehrmaschinenanordnung mit zwei sechsachsigen Industrierobotern 11, 21 und deren PC-basierten Robotersteuerungen 10 bzw. 20, die Werkstücke (nicht dargestellt) in eine Presse 31 mit einer SPS 30 einlegen bzw. aus ihr entnehmen und sie auf einen Fördere 41 mit einer SPS 40 ablegen.

Die Robotersteuerungen 10, 20 sowie die Pressen-SPS 30 sind direkt, die Förderer-SPS 40 indirekt über ein Proxy 42, mit einem Ethernet-Netzwerk 100 verbunden, das in Fig. 1 strichpunktiert angedeutet ist. Mit diesem Netzwerk kommuniziert zudem ein Notebook 50 sowie ein Backup-Server 60, auf dem Daten, beispielsweise Zustandsdaten der Steuerungen 10,...,40 abgespeichert werden können.

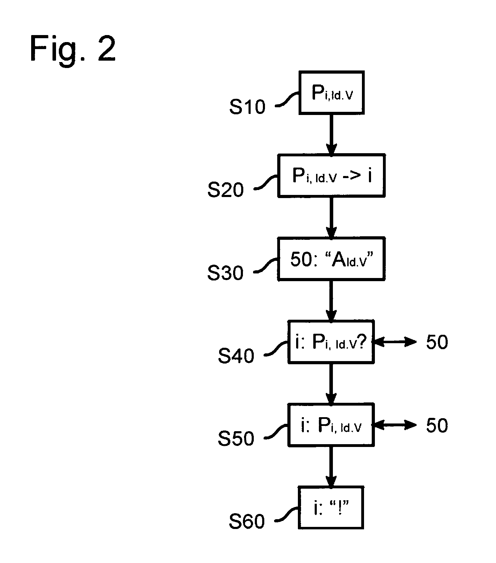

Um nun ein neues Projekt, beispielsweise die Bearbeitung anderer Werkstücke, oder eine neue Projektversion, beispielsweise mit geänderten, optimierten Arbeitsabläufen, in dieser heterogen Automatisierungszelle zu implementieren, erzeugt in einem ersten Schritt S10 (vgl. Fig. 2) die Planungseinrichtung 50 für jede Steuerung 10,...40, ein für dieses Projekt, gekennzeichnet durch eine eindeutige Identifizierung "Id", und diese Projektversion, gekennzeichnet durch eine eindeutige Identifizierung ".V", spezifisches Daten- bzw. Deploymentpaket P_{i,ld.v}, i = 10,...40. Hierzu sind in dem Computer 50 typspezifische Generatoren implementiert (nicht dargestellt), die beispielsweise für die SPS 30 oder die Robotersteuerung 10 die notwendigen Arbeitsprogramme sowie Konfigurationsdateien paketieren. Sind beispielsweise Roboter 11, 21 und Steuerungen 10, 20 gleichartig, kann derselbe Generator die für diese spezifizierten Datenpakte generieren.

In einem nächsten Schritt S20 sendet die Planungseinrichtung 50 über das Ethernet 100 parallel an alle Zellenteilnehmer 10,...42 die entsprechenden Datenpakete. Dabei wird auch eine sequentielle Abarbeitung mit geringen Zeitabständen als parallel im Sinne der vorliegenden Erfindung verstanden. Anschließend kann das neue Projekt bzw. die neue Projektversion aktiviert werden.

Hierzu sendet Computer 50 ein entsprechendes Aktivierungssignal A_{i,ld.V} an die einzelnen Empfänger 10,...42, das das zu aktivierende Projekt Id und dessen Version .V eindeutig identifiziert (Schritt S30). Alternativ kann auch ein nur das zu aktivierende Projekt Id und dessen Version .V spezifizierende Aktivierungssignal gesendet und es den einzelnen Zielsystemen überlassen bleiben, zu prüfen, ob sie daran beteiligt sind.

In einer Vorbereitungsphase (S40) prüfen daraufhin die Zielsysteme, ob ein entsprechendes Deploymentpaket vorhanden und für sie bestimmt ist, ob ihr Systemzustand eine Aktivierung erlaubt, und bringen sich gegebenenfalls in einen vorgegebenen Zustand. Wird beispielsweise das Aktivierungssignal während eines Produktionszyklus gesendet, wird dieser zunächst abgearbeitet, bevor die Steuerungen 10, 20, 30 die Roboter 11, 21 bzw. die Presse 31 in einer Home-Stellung anhalten und ihr bisheriges Arbeitsprogramm abwählen. Erfolg bzw. Misserfolg der Vorbereitungsphase melden die einzelnen Steuerungen an die zentrale Planungseinrichtung 50, die bei Misserfolg auch nur eines Teilsystems die weiter Implementierung des Projektes stoppt und eine Fehlermeldung an den Anwender ausgibt.

Die Planungseinrichtung 50 informiert die Zielsysteme über den Erfolg der Vorbereitungsphase. War diese insgesamt erfolgreich, implementieren die Steuerungen 10,...40 Daten aus ihren Deploymentpaketen. Insbesondere werden Installationsprogramme aufgerufen, Arbeitsprogramme installiert und/oder Konfigurationsdateien eingepflegt (S50). Zuvor werden die bisherigen Zustände der Steuerungen 10,...40, beispielsweise auf dem Backup-Server 60, vorzugsweise im Imaging-Verfahren, abgespeichert. Zusätzlich werden weitere vorgegebene Aktionen, beispielsweise Re-Initialisierungen der Ein-/Ausgabe-Einheiten (IO-Reinit) oder Systemneustarts durchgeführt.

Auch Erfolg bzw. Misserfolg dieser Installationsphase melden die einzelnen Steuerungen an die zentrale Planungseinrichtung 50, die bei Misserfolg auch nur eines Teilsystems die weiter Implementierung des Projektes stoppt, eine Fehlermeldung an den Anwender ausgibt, und unter Rückgriff auf die auf dem Backup-Server 60 gespeicherten alten Zustandsdaten soweit wie möglich den alten Systemgesamtzustand wieder herstellt. Bei erfolgreicher Installationsphase können diese alten Zustandsdaten hingegen gelöscht werden. In einer alternativen Ausführung können solche Zustandsdaten natürlich statt auf dem Backup-Server 60 auch auf den Steuerungen 10,...40 direkt gespeichert werden.

Wiederum informiert die Planungseinrichtung 50 die Zielsysteme über den Erfolg der Installationsphase (S50). Sind auf allen Zielsteuerungen 10,...40 die neuen Arbeitsprogramme und Konfigurationsdateien implementiert, und befinden sich die Maschinen 11,...41 in den vorgegebenen Zuständen, zum Beispiel Home-Posen, starten die Zielsteuerungen 10,...40 die neuen Arbeitsprogramme (Schritt S60). Befindet sich die Automatisierungszelle im Automatikmodus, kann sofort eine Fahrfreigabe erfolgen und die Produktion mit dem neuen Projekt bzw. der neuen Projektversion fortgesetzt werden.

Durch die Koordinierung und Prüfung der Implementierung durch die zentrale Planungseinrichtung 50 können inkonsistente Systemzustände weitgehend vermieden werden. Auf der anderen Seite ermöglicht die vorliegende Erfindung die rasche, sichere und automatisierte Verteilung von Automatisierungslösungen in heterogenen Anlagen wie der im Ausführungsbeispiel gezeigten.

### Bezugszeichenliste

- 10, 20: Roboter
- 11, 21: Robotersteuerung
- 30: Presse
- 31: SPS-Pressensteuerung
- 40: Förderer
- 41: SPS- Förderersteuerung
- 50: Computer (zentrale Planungseinrichtung)
- 60: Backup-Server
- 100: Ethernet-Netzwerk

## Patentansprüche

1. Verfahren zum Steuern einer Mehrmaschinenanordnung mit wenigstens einer ersten Steuerung (10) und einer zweiten Steuerung (20, 30, 40), mit den Schritten:
b) Generieren (S10) von spezifischen Datenpaketen (P_{i,ld.V}) für Steuerungen;
c) Übertragen (S20) dieser spezifischen Datenpakete an die Steuerungen;
f) ,insbesondere selektives, Aktivieren (S30) übertragener Datenpakete; und
k) Implementieren (S50) von Daten des Datenpaketes in den Steuerungen infolge einer Aktivierung, insbesondere Installieren wenigstens eines Programm und/oder einer Konfigurationsdatei.

2. Verfahren nach Anspruch 1, **gekennzeichnet durch** wenigstens einen der Schritte:
a) Definieren einer Struktur der Mehrmaschinenanordnung, insbesondere deren Steuerungen, in einem zentralen Projekt;
d) Überprüfen (S40) eines an eine Steuerung übertragenen Datenpaketes **durch** die Steuerung, insbesondere bezüglich Identität, Typ, Version, Subsystemen, Peripheriegeräten, Kinematik und/oder Erweiterungen der Steuerung und/oder,einer von dieser gesteuerten Maschine;
e) Speichern eines übertragenen Datenpaketes **durch** die Steuerung;
g) Überprüfen infolge einer Aktivierung, ob ein aktivierungsspezifisches Datenpaket vorhanden ist, ob dieses Datenpaket für diese Steuerung spezifiziert ist, und/oder ob die Steuerung und/oder eine **durch** sie gesteuerte Maschine, eine Aktivierung gestattet, **durch** eine Steuerung;
h) Überführen einer Steuerung und/oder eine **durch** sie gesteuerten Maschine in einen vorgegebenen Zustand infolge einer Aktivierung;
i) Melden (S40, S50) einer erfolgreichen und/oder einer nicht erfolgreichen Aktivierung **durch** eine Steuerung;
j) Abspeichern von Zustandsdaten vor der Implementierung;
l) Ausführen eine vorgegebene Aktion, insbesondere einer Initialisierung, eines Systemneustart, einer Kalibrierung oder dergleichen, infolge einer Aktivierung;
m) Informieren (S50) einer Steuerung über das Ergebnis einer Aktivierung einer anderen Steuerung;
n) Löschen von Zustandsdaten einer Steuerung bei erfolgreicher Aktivierung; und/oder Wiederherstellung eines vorheriger Zustandes einer Steuerung bei nicht erfolgreicher Aktivierung auf Basis gespeicherter Zustandsdaten; und/oder
o) Starten (S60) eines infolge einer Aktivierung installierten Programms.

3. Verfahren nach einem der vorhergehenden Ansprüche, **dadurch gekennzeichnet, dass** ein Datenpaket (P_{i,ld.V}) für eine bestimmte Steuerung (i = 10, 20, 30, 40), eine bestimmte Maschine, ein bestimmtes Projekt (Id) und/oder eine bestimmte Projektversion (.V) spezifiziert ist.

4. Verfahren nach einem der vorhergehenden Ansprüche, **dadurch gekennzeichnet, dass** eine Steuerung eine PC-basierte Steuerung (10, 20) und/oder eine speicherprogrammierbare Steuerung (30, 40), insbesondere eine Robotersteuerung (10, 20), umfasst; und/oder dass ein Kommunikationsschnittstelle, insbesondere ein Proxy (42), Daten zwischen einer Steuerung und einer Planungseinrichtung (50, 60) oder einem Netzwerk (100) weiterleitet.

5. Verfahren nach einem der vorhergehenden Ansprüche, **dadurch gekennzeichnet, dass** spezifische Datenpakete an Steuerungen parallel, insbesondere über ein Netzwerk (100), übertragen werden; und/oder dass eine Aktivierung zentral und/oder gleichzeitig, insbesondere unter Angabe eines bestimmten Projektes (Id) und/oder einer bestimmten Projektversion (.V) erfolgt.

6. Verfahren nach einem der vorhergehenden Ansprüche, **dadurch gekennzeichnet, dass** eine, insbesondere zentrale, Planungseinrichtung, insbesondere ein Computer (50), wenigstens einen der Schritte a) bis o) automatisiert durchführt.

7. Vorrichtung zum Steuern einer Mehrmaschinenanordnung mit wenigstens einer ersten Steuerung (10) und einer zweiten Steuerung (20, 30, 40), mit einer Planungseinrichtung (50, 60), die zur Durchführung eines Verfahrens nach einem der vorhergehenden Ansprüche eingerichtet ist.

8. Computerprogramm, dass ein Verfahren nach einem der Ansprüche 1 bis 6 ausführt, wenn es in einer Vorrichtung nach Anspruch 7 abläuft.

9. Computerprogrammprodukt mit Programmcode, der auf einem maschinenlesbaren Träger gespeichert ist und ein Computerprogramm nach Anspruch 8 umfasst.
